# EUROPEAN PATENT SPECIFICATION

(11) **EP 1 557 985 B1**
(45) Date of publication and mention of the grant of the patent: **01.09.2010**
(21) Application number: 03770074.7
(22) Date of filing: 31.10.2003
(51) Int. Cl.: H04L 12/56, H04L 29/06, H04L 1/18

(54) **Communication system and method**
Kommunikationssystem und Verfahren
Système et procédé de communication

(30) Priority: 01.11.2002 JP 2002320129
(43) Date of publication of application: 27.07.2005
(73) Proprietor: Panasonic Corporation, Kadoma-shi Osaka 571-8501 (JP)
(72) Inventor: NANRI, Masahiko, Yokosuka-shi, Kanagawa 239-0847 (JP)
(74) Representative: Grünecker, Kinkeldey, Stockmair & Schwanhäusser Anwaltssozietät
(86) International application number: PCT/JP2003/013984
(87) International publication number: WO 2004/040861

(56) References cited:
- JP-A- 2001 111 618
- JP-A- 2002 152 308
- US-A1- 2002 154 602
- SAKATANI. T: 'Congestion avoidance for video over LANs' TECHNICAL REPORT OF IEICE - THE INSTITUTE OF ELECTRONICS, INFORMATION AND COMMUNICATION ENGINEERS 13 May 1994, pages 51 - 58, XP002974839

## Description

### Technical Field

The present invention relates to a communication system and method that controls congestion in transport protocol.

### Background Art

As a conventional communication system, a well-known system comprises a transmission section that transmits a real-time data via a communication network, a reception section that receives a data loss rate information from a data transmission destination of the transmission section, and a rate control section that controls a transmission rate based on the data loss rate from the reception section (refer to Japanese Unexamined Patent Publication No. 2001-320440 for example).

According to the conventional communication system, the rate control section compares the data loss rate information and the pre-set first and second threshold values, thereby increasing a transmission rate for transmission used by the transmission section if the data loss rate is lower than the first and second threshold values, thereby holding a transmission rate for transmission used by the transmission section if the data loss rate is higher than the first threshold value and lower than the second threshold value, and thereby decreasing a transmission rate for transmission used by the transmission section if the data loss rate is higher than the first and the second threshold values.

However, the conventional communication system had a problem of being unable to control the quantity of packets being transmitted before occurrence of congestion of the packets being transmitted, because the packet congestion should be decided after detecting the packet loss for a given period.

Early congestion detection is disclosed in US 2002/0154602

### Disclosure of Invention

An object of the present invention is to provide the communication system and method that controls the quantity of packets being transmitted before occurrence of congestion of the packets being transmitted.

According to the first aspect of the present invention, a communication system comprises a transmission section that transmits, for each accumulative ACK packet received, packets with a transmission window size determined in response to a new window-size information added to the accumulative ACK packet; a reception section that receives and counts the packets with the transmission window size, which are transmitted from the transmission section, that generates a packet count value, and that returns the accumulative ACK packet if the packet count value reaches the specified reference number corresponding to the transmission window size; and a new window-size information generation section that generates the new window-size information based on a packet arrival time required for a specified reference number of packets corresponding to the transmission window size to arrive, and that adds it to the accumulative ACK packet.

According to second aspect of the present invention, a communication method comprises a transmission section that transmits, for each accumulative ACK packet received, packets with a transmission window size determined in response to the new window-size information added to the accumulative ACK packets, comprising; a reception step of receiving and counting the packets with the transmission window size, which are transmitted from the transmission section, generating a packet count value, and returning the accumulative ACK packet if the packet count value reaches the specified reference number corresponding to the transmission window size; and a new window-size information generation step of generating the new window-size information based on a packet arrival time required for a specified reference number of packets corresponding to the transmission window size to arrive, and adding it to the accumulative ACK packet.

### Brief Description of Drawings

FIG.1 is a block diagram showing a configuration of the communication system according to embodiment 1 of the present invention.
FIG.2 is a flow chart that explains an operation of the communication system according to embodiment 1 of the present invention.
FIG.3 is a drawing showing a specific example for explaining the operation of the communication system according to embodiment 1 of the present invention.
FIG.4 is a drawing showing another specific example for explaining the operation of the communication system according to embodiment 1 of the present invention.
FIG.5 is a block diagram showing a configuration of the communication system according to embodiment 2 of the present invention.
FIG.6 is a flow chart that explains an operation of the communication system according to embodiment 2 of the present invention.

### Best Mode for Carrying Out the Invention

According to the essence of the present invention, the reception section generates the new window size information based on a packet arrival time required for a specified reference number of packets corresponding to the transmission window size to arrive, and the transmission section transmits the packets with a transmission window size determined in response to the new window size information.

Next, the embodiments of the present invention shall be described in detail with reference to the drawings.

### (Embodiment 1)

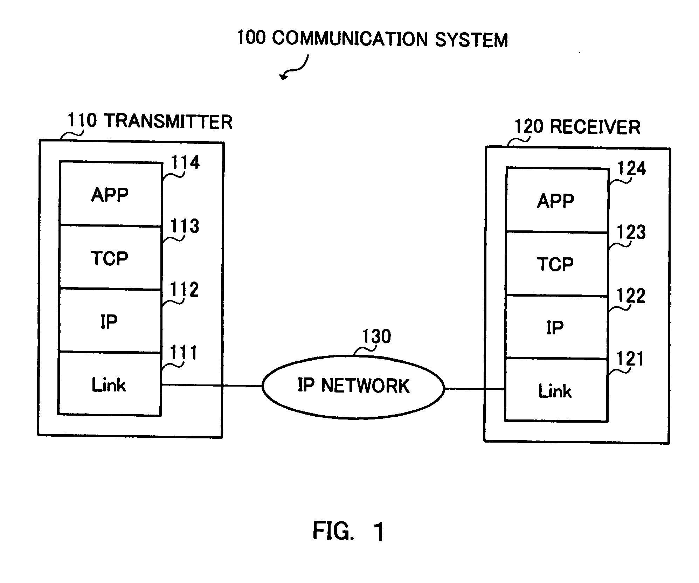

FIG.1 is a block diagram showing a configuration of the communication system according to embodiment 1 of the present invention.

As shown in FIG.1, the communication system 100 according to embodiment 1 of the present invention comprises a transmitter 110 and a receiver 120. The transmitter 110 transmits data to the receiver 120 via an IP network 130. Moreover, the receiver 120 returns a specific information to the transmitter 110 via the IP network 130.

The transmitter 110 comprises a Link layer 111, an IP layer 112, a TCP layer 113, and an APP layer 114. The receiver 120 comprises a Link layer 121, an IP layer 122, a TCP layer 123, and an APP layer 124.

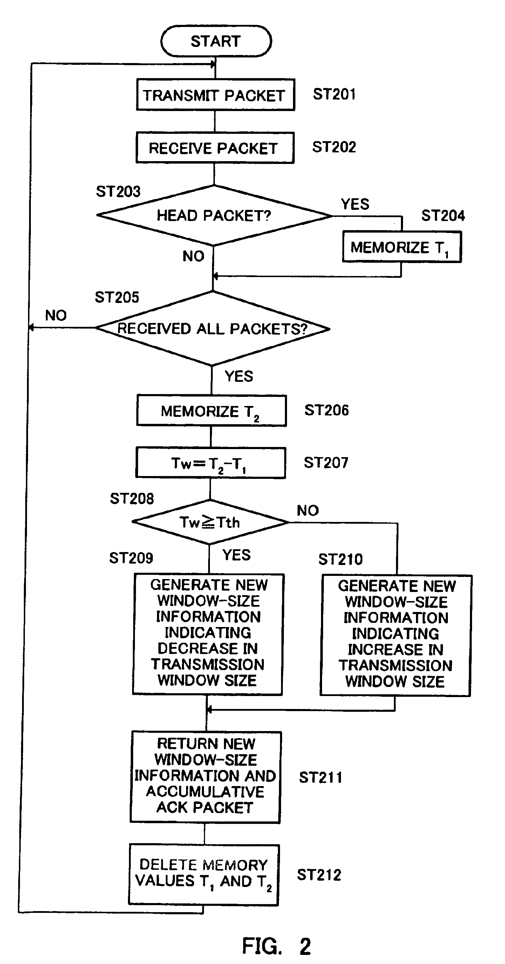

The operation of the communication system according to embodiment 1 of the present invention shall be described next in detail with reference to FIG.1 and FIG. 2. FIG.2 is a flow chart that describes the operation of the communication system according to embodiment 1 of the present invention.

As shown in FIG.2, in step ST201, the transmitter 110 transmits packets. At this time, the transmitter 110 transmits packets with a transmission window size determined in response to a transmission window size set initially; or for each accumulative ACK packet received from the receiver 120, transmits packets with a transmission window size determined in response to a new window-size information added to the accumulative ACK packet.

Next, in step ST202, the receiver 120 receives a packet from the transmitter 110, and then determines if the packet received is the head packet of a transmission window size (step ST203). The head packet of a transmission window size includes a transmission window size. If the packet received at step ST203 is the head packet of a transmission window size, then the receiver 120 memorizes a time T₁ of receiving the head packet (step ST204).

If the packet received in step ST203 is not the head packet of a transmission window size, then the receiver 120 receives and counts packets of a transmission window size transmitted from the transmitter 110, generates a packet count value, and determines if the packet count value has reached a specified reference number corresponding to the transmission window size. In other words, it determines whether or not all packets of a transmission window size had been received (step ST205). If the packet count value has not reached the specified reference number corresponding to the transmission window size in step ST205, in other words, if all packets of a transmission window size have not been received, then the process returns to step ST201. In step ST205, if the packet count value reaches the specified reference number corresponding to the transmission window size, in other words, if all packets of a transmission window size have been received, then a time T₂ is memorized (step ST206) .

Next, in step ST207, provided that a packet arrival time required for a specified reference number of packets corresponding to the transmission window size to arrive is Tw, the Tw is obtained from the calculation of Tw= T₂- T₁. Next, given that a specific threshold value is Tth, the receiver 120 determines Tw≧ Tth (step ST208).

In step ST208, if Tw≧ Tth is true, the receiver 120 generates a new window-size information instructing decrease in the transmission window size (step ST209). Moreover, in step ST208, if Tw≧ Tth is not true, the receiver 120 generates a new window-size information instructing increase in the transmission window size (step ST210).

Next, the receiver 120 normally receives the packet from the transmitter 110, generates an accumulative ACK packet indicating the packet count value if the packet count value has been normally generated, adds a new window-size information to the accumulative ACK packet, and returns the accumulative ACK packet and the new window-size information to the transmitter 110 (step ST211). After that, the receiver 120 deletes the memory values of T₁ and T₂ (step ST212), and the process returns to step ST201.

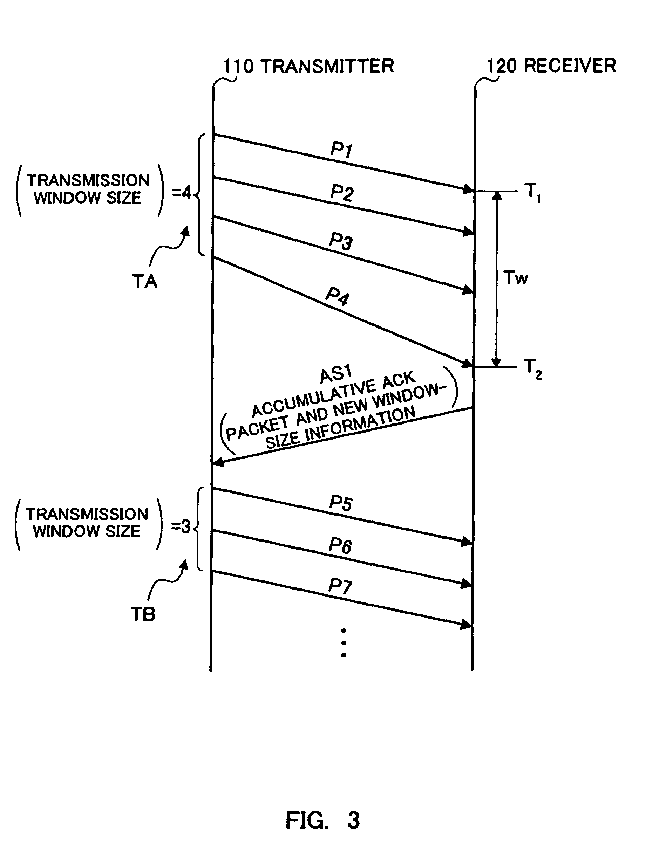

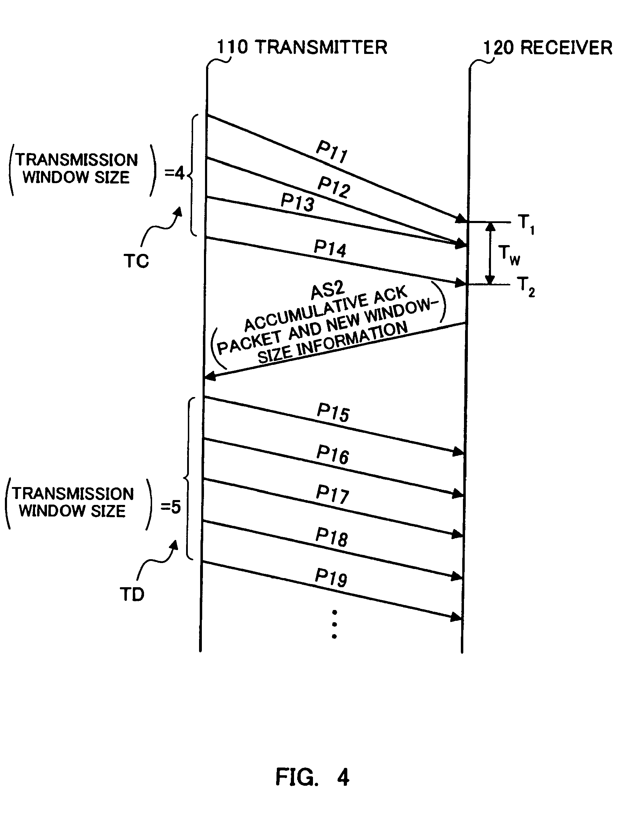

The specific example of operation of the communication system 100 according to embodiment 1 of the present invention shall be described in detail with reference to FIG. 1 and FIG.2, along with FIG.3 and FIG.4.

As shown in FIG.3, the transmitter 110 in the state of transmission window size=4, transmits 4 packets P1, P2, P3 and P4 at time TA, and the receiver 120 returns a packet AS1 showing a new window-size information and an accumulative ACK packet to the transmitter 110 if Tw ≧ Tth is true. At this time, the new window-size information indicates a decrease in the transmission window size.

The transmitter 110 transmits the next packets P5, P6, and P7 at time TB with a transmission window size decreased from the transmission window size=4 down to the transmission window size=3 since the new window-size information instructs a decrease in the transmission window size if it receives the packet AS1 from the receiver 120.

Moreover, as shown in FIG.4, the transmitter 110 in a state of transmission window size=4, transmits four packets P11, P12, P13, and P14 at time TC, and the receiver 120 returns a packet AS2 showing a new window-size information and an accumulative ACK packet to the transmitter 110 if Tw≧ Tth is not true. At this time, the new window-size information indicates an increase in the transmission window size.

The transmitter 110 transmits the next packets P15, P16, P17, P18, and P19 at time TD by increasing a transmission window size from the transmission window size=4 up to the transmission window size=5 since the new window-size information instructs an increase in the transmission window size if it receives the packet AS2 from the receiver 120.

As described above, according to embodiment 1 of the present invention, the receiver 120 generates a new window-size information based on the packet arrival time Tw required for a specified reference number of packets corresponding to the transmission window size to arrive, and the transmitter 110 transmits the packets with the transmission window size determined in response to the new window-size information. This way, the quantity of packets being transmitted is controlled before occurrence of congestion of the packets being transmitted.

### (Embodiment 2)

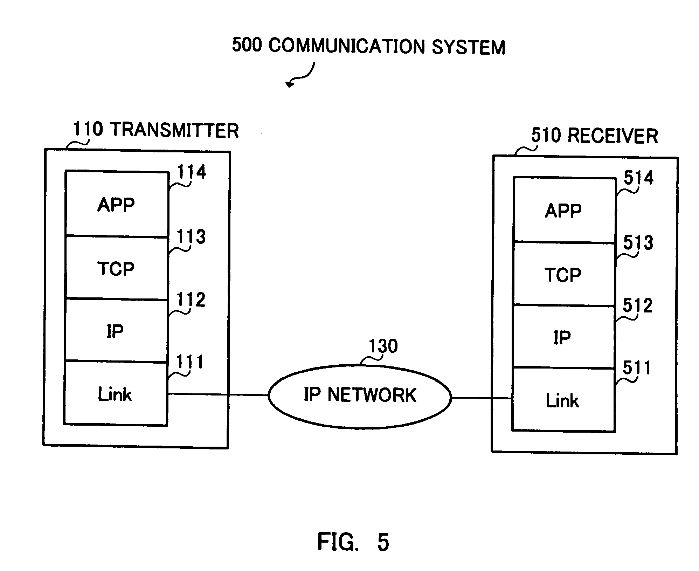

Embodiment 2 of the present invention shall be described next in detail with reference to the drawings. FIG.5 is a block chart showing a configuration of the communication system according to embodiment 2 of the present invention. Now, in embodiment 2 of the present invention, the same reference numerals are used to indicate the same elements of embodiment 1 of the present invention.

As shown in FIG.5, a communication system 500 according to embodiment 2 of the present invention comprises the transmitter 110 and a receiver 510. The transmitter 110 transmits data to the receiver 510 via the IP network 130. The receiver 510 returns a specific information to the transmitter 110 via the IP network 130.

The transmitter 110 comprises the Link layer 111, the IP layer 112, the TCP layer 113, and the APP layer 114. The receiver 510 comprises a Link layer 511, an IP layer 512, a TCP layer 513, and an APP layer 514.

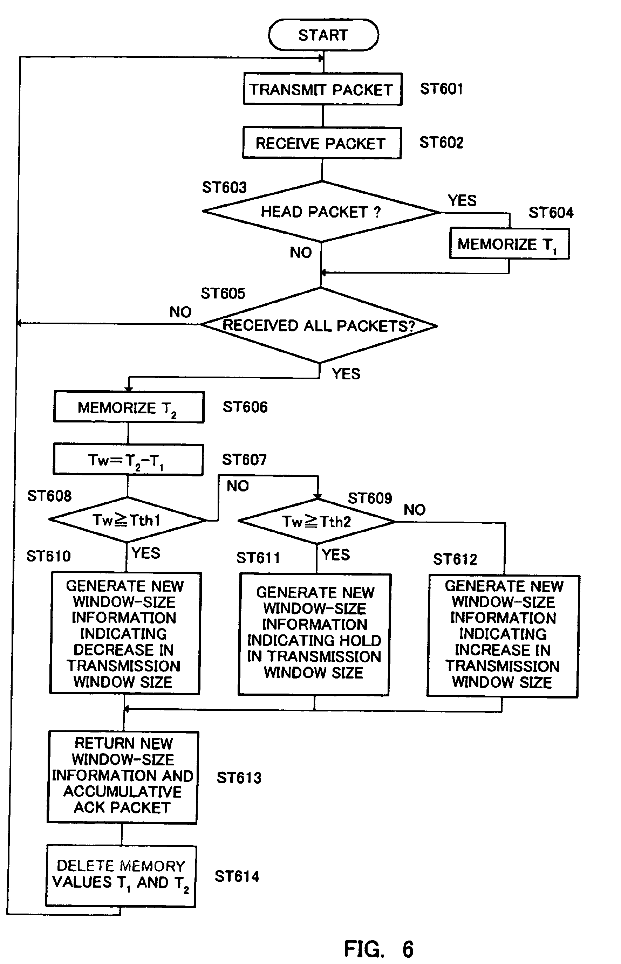

Next, the operation of the communication system 500 according to embodiment 2 of the present invention shall be described in detail with reference to FIG.5 and FIG. 6. FIG.6 is a flow chart that describes the operation of the communication system 500 according to embodiment 2 of the present invention.

As shown in FIG.6, in step ST601, the transmitter 110 transmits packets. At this time, the transmitter 110 transmits, for each accumulative ACK packet received from the receiver 510, packets with a transmission window size determined in response to a new window-size information added to the accumulative ACK packet.

Next, in step ST602, the receiver 510 receives a packet from the transmitter 110, and then determines if the received packet is the head packet of a transmission window size (step ST603). The head packet of a transmission window size includes a transmission window size. If the packet received at step ST603 is the head packet of a transmission window size, then the receiver 510 memorizes a time T₁ of receiving the head packet (step ST604).

If the packet received at step ST603 is not the head packet of a transmission window size, then the receiver 510 receives and counts the packets of a transmission window size transmitted from the transmitter 110, generates a packet count value, and determines if the packet count value has reached a specified reference number corresponding to the transmission window size. In other words, it determines if all packets of the transmission window size have been received (step ST605). If the packet count value has not reached the specified reference number corresponding to the transmission window size in step ST605, in other words, if all packets of a transmission window size have not been received, the process returns to ST601. In step ST605, if the packet count value reaches the specified reference number corresponding to the transmission window size, in other words, if all packets of a transmission window size have been received, then a time T₂ is memorized (step ST606) .

Next, in step ST607, provided that a packet arrival time required for a specified reference number of packets corresponding to the transmission window size to arrive is Tw, the Tw is obtained from the calculation of Tw= T₂- T₁. Next, given that a first specific threshold value is Tth1, the receiver 510 determines Tw≧ Tth1 (step ST608). In step ST608, if Tw≧Tth1 is not true, given that a second specific threshold value is Tth2 (Tth1>Tth2), Tw≧Tth2 is determined (step ST609).

In step ST608, if Tw≧ Tth1 is true, the receiver 510 generates a new window-size information instructing decrease in the transmission window size (step ST610). Moreover, in step ST609, if Tw≧ Tth2 is true, the receiver 510 generates a new window-size information instructing a hold in the transmission window size (step ST611). Moreover, in step ST609, if Tw≧Tth2 is not true, the receiver 510 generates a new window-size information instructing increase in the transmission window size (step ST612).

Next, the receiver 510 normally receives packet from the transmitter 110, generates an accumulative ACK packet indicating the packet count value if the packet count value is normally generated, adds a new window-size information to the accumulative ACK packet, and returns the accumulative ACK packet and the new window-size information to the transmitter 110 (step ST613). After that, the receiver 510 deletes the memory values T₁ and T₂ (step ST614), and the process returns to ST601.

As stated above, according to embodiment 2 of the present invention, the receiver 510 generates a new window-size information based on the packet arrival time Tw required for a specified reference number of packets corresponding to the transmission window size to arrive, and the transmitter 110 transmits the packets with the transmission window size determined in response to the new window-size information; therefore, the quantity of packets being transmitted are controlled before occurrence of congestion of the packets being transmitted.

As described above, according to the present invention, the reception section generates a new window-size information based on the packet arrival time required for a specified reference number of packets corresponding to the transmission window size to arrive, and the transmission section transmits the packets with the transmission window size determined in response to the new window-size information, and the quantity of packets being transmitted are controlled before occurrence of congestion of the packets being transmitted.

The present invention is based on Japanese patent publication No. 2002-320129 filed on November 1, 2002.

### Industrial Applicability

The present invention is applicable to the communication system and method that controls congestion in transport protocol.
**FIG.1**
   100 COMMUNICATION SYSTEM
   110 TRANSMITTER
   120 RECEIVER
   130 IP NETWORK
**FIG.2**
   START
   ST201 TRANSMIT PACKET
   ST202 RECEIVE PACKET
   ST203 HEAD PACKET?
   ST204 MEMORIZE T₁
   ST205 RECEIVED ALL PACKETS?
   ST206 MEMORIZE T₂
   ST209 GENERATE WINDOW-SIZE INFORMATION INDICATING DECREASE IN TRANSMISSION WINDOW SIZE
   ST210 GENERATE WINDOW-SIZE INFORMATION INDICATING INCREASE IN TRANSMISSION WINDOW SIZE
   ST211 RETURN NEW WINDOW-SIZE INFORMATION AND ACCUMULATIVE ACK PACKET
   ST212 DELETE MEMORY VALUES T₁ AND T₂
**FIG.2**
   110 TRANSMITTER
   120 RECEIVER
   AS1 (ACCUMULATIVE ACK PACKET AND NEW WINDOW-SIZE INFORMATION)
   TA (TRANSMISSION WINDOW SIZE)=4
   TB (TRANSMISSION WINDOW SIZE)=3
**FIG. 4**
   110 TRANSMITTER
   120 RECEIVER
   AS2 (ACCUMULATIVE ACK PACKET AND NEW WINDOW-SIZE INFORMATION)
   TA (TRANSMISSION WINDOW SIZE)=4
   TD (TRANSMISSION WINDOW SIZE)=5
**FIG.5**
   110 TRANSMITTER
   510 RECEIVER
   130 IP NETWORK
   500 COMMUNICATION SYSTEM
**FIG.6**
   START
   ST601 TRANSMIT PACKET
   ST602 RECEIVE PACKET
   ST603 HEAD PACKET ?
   ST604 MEMORIZE T₁
   ST605 RECEIVED ALL PACKETS?
   ST606 MEMORIZE T₂
   ST610 GENERATE NEW WINDOW-SIZE INFORMATION INDICATING DECREASE IN TRANSMISSION WINDOW SIZE
   ST611 GENERATE NEW WINDOW-SIZE INFORMATION INDICATING HOLD IN TRANSMISSION WINDOW SIZE
   ST612 GENERATE NEW WINDOW-SIZE INFORMATION INDICATING INCREASE IN TRANSMISSION WINDOW SIZE
   ST613 RETURN NEW WINDOW-SIZE INFORMATION AND ACCUMULATIVE ACK PACKET
   ST614 DELETE MEMOERY VALUES T₁ AND T₂

## Claims

1. A communication system comprising:
a transmission section that transmits, for each accumulative ACK packet received, packets with a transmission window size determined in response to a new window-size information added to the accumulative ACK packet;
a reception section that receives and counts the packets with the transmission window size, which are transmitted from the transmission section, that generates a packet count value, and that returns the accumulative ACK packet if the packet count value reaches a specified reference number corresponding to the transmission window size; and
a new window-size information generation section that generates the new window-size information based on a packet arrival time required for the specified reference number of the packets corresponding to the transmission window size to arrive, and that adds it to the accumulative ACK packet.

2. The communication system according to claim 1, wherein the new window-size information generation section generates the new window-size information indicating a decrease in the transmission window size if the packet arrival time is greater than a specific threshold value, and indicating an increase in the transmission window size if the packet arrival time is less than the specific threshold value.

3. The communication system according to claim 1, wherein the new window-size information generation section generates the new window-size information indicating a decrease in the transmission window size if the packet arrival time is greater than a first threshold value, generates the new window-size information indicating a hold in the transmission window size if the packet arrival time is less than the first threshold value and greater than a second threshold value, and generates the new window-size information indicating an increase in the transmission window size if the packet arrival time is less than the second threshold value.

4. A communication method of the communication system including a transmission section that transmits, for each accumulative ACK packet received, packets with a transmission window size determined in response to a new window-size information added to the accumulative ACK packet, comprising:
a reception step of receiving and counting the packets with the transmission window size, which are transmitted from the transmission section, generating a packet count value, and returning the accumulative ACK packet if the packet count value reaches the specified reference number corresponding to the transmission window size; and
a new window-size information generation step of generating the new window-size information based on a packet arrival time required for the specified reference number of the packets corresponding to the transmission window size to arrive, and adding it to the accumulative ACK packet.

## Patentansprüche

1. Kommunikationssystem, das umfasst:
einen Sendeabschnitt, der für jedes empfangene akkumulierende ACK-Paket Pakete mit einer Sende-Fenstergröße sendet, die in Reaktion auf eine neue Fenstergrößen-Information bestimmt wird, die zu dem akkumulierenden ACK-Paket hinzugefügt wird;
einen Empfangsabschnitt, der die Pakete mit der Sende-Fenstergröße empfängt und zählt, die von dem Sendeabschnitt gesendet werden, der einen Paket-Zählwert erzeugt und der das akkumulierende ACK-Paket zurückführt, wenn der Paket-Zählwert eine festgelegte Bezugs-Anzahl erreicht, die der Sende-Fenstergröße entspricht; und
einen Abschnitt zum Erzeugen einer neuen Fenstergrößen-Information, der die neue Fenstergrößen-Information auf Basis einer Paket-Ankunftszeit erzeugt, die die festgelegte Bezugs-Anzahl von Paketen, die der Sende-Fenstergröße entsprechen, benötigen, um anzukommen, und der sie zu dem akkumulierenden ACK-Paket hinzufügt.

2. Kommunikationssystem nach Anspruch 1, wobei der Abschnitt zum Erzeugen einer neuen Fenstergrößen-Information die neue Fenstergrößen-Information erzeugt, die eine Verringerung der Sende-Fenstergröße anzeigt, wenn die Paket-Ankunftszeit über einem bestimmten Schwellenwert liegt, und eine Zunahme der Sende-Fenstergröße anzeigt, wenn die Paket-Ankunftszeit unter dem bestimmten Schwellenwert liegt.

3. Kommunikationssystem nach Anspruch 1, wobei der Abschnitt zum Erzeugen einer neuen Fenstergrößen-Information die neue Fenstergrößen-Information erzeugt, die eine Verringerung der Sende-Fenstergröße anzeigt, wenn die Paket-Ankunftszeit über einem ersten Schwellenwert, die neue Fenstergrößen-Information erzeugt, die ein Gleichbleiben der Sende-Fenstergröße anzeigt, wenn die Paket-Ankunftszeit unter dem ersten Schwellenwert liegt und über einem zweiten Schwellenwert liegt, und die neue Fenstergrößen-Information anzeigt, die eine Zunahme der Sende-Fenstergröße anzeigt, wenn die Paket-Ankunftszeit unter dem zweiten Schwellenwert liegt.

4. Kommunikationsverfahren des Kommunikationssystems, das einen Sendeabschnitt enthält, der für jedes empfangene akkumulierende ACK-Paket Pakete mit einer Sende-Fenstergröße sendet, die in Reaktion auf eine neue Fenstergrößen-Information bestimmt wird, die zu dem akkumulierenden ACK-Paket hinzugefügt wird, wobei das Verfahren umfasst:
einen Empfangsschritt, in dem die Pakete mit der Sende-Fenstergröße empfangen und gezählt werden, die von dem Sendeabschnitt gesendet werden, ein Paket-Zählwert erzeugt wird und das akkumulierende ACK-Paket zurückgeführt wird, wenn der Paket-Zählwert die festgelegte Bezugs-Anzahl erreicht, die der Sende-Fenstergröße entspricht; und
einen Schritt zum Erzeugen einer neuen Fenstergrößen-Information, in dem die neue Fenstergrößen-Information auf Basis einer Paket-Ankunftszeit erzeugt wird, die die festgelegte Bezugs-Anzahl der Pakete, die der Sende-Fenstergröße entspricht, benötigt, um anzukommen, und diese zu dem akkumulierenden ACK-Paket hinzugefügt wird.

## Revendications

1. Système de communication comprenant :
une section de transmission qui transmet, pour chaque paquet cumulatif d'accusés ACK reçu, des paquets présentant une taille de fenêtre de transmission déterminée en réponse à de nouvelles informations de taille de fenêtres ajoutées au paquet cumulatif d'accusés ACK,
une section de réception qui reçoit et compte les paquets présentant la taille de la fenêtre de transmission, qui sont transmis à partir de la section de transmission, laquelle génère une valeur de comptage de paquets et laquelle renvoie le paquet cumulatif d'accusés ACK si la valeur de comptage de paquets atteint un nombre de référence spécifié correspondant à la taille de la fenêtre de transmission, et
une section de génération de nouvelles informations de taille de fenêtres qui génère les nouvelles informations de taille de fenêtres sur la base de la durée d'arrivée des paquets requise pour le nombre de référence spécifié de paquets correspondant à la taille de la fenêtre de transmission devant arriver et qui l'ajoute au paquet cumulatif d'accusés ACK.

2. Système de communication selon la revendication 1, dans lequel la section de génération de nouvelles informations de taille de fenêtres génère les nouvelles informations de taille de fenêtres indiquant une diminution de la taille de la fenêtre de transmission si la durée d'arrivée des paquets est supérieure à une valeur de seuil spécifique, et indiquant une augmentation de la taille de la fenêtre de transmission si la durée d'arrivée des paquets est inférieure à la valeur de seuil spécifique.

3. Système de communication selon la revendication 1, dans lequel la section de génération de nouvelles informations de taille de fenêtres génère les nouvelles informations de taille de fenêtres indiquant une diminution de la taille de la fenêtre de transmission si la durée d'arrivée des paquets est supérieure à une première valeur de seuil, génère les nouvelles informations de taille de fenêtres indiquant un maintien de la taille de la fenêtre de transmission si la durée d'arrivée des paquets est inférieure à la première valeur de seuil et supérieure à une seconde valeur de seuil, et elle génère les nouvelles informations de taille de fenêtres indiquant une augmentation de la taille de la fenêtre de transmission si la durée d'arrivée des paquets est inférieure à la seconde valeur de seuil.

4. Procédé de communication du système de communication incluant une section de transmission qui transmet, pour chaque paquet cumulatif d'accusés ACK reçu, des paquets présentant une taille de fenêtre de transmission déterminée en réponse à de nouvelles informations de taille de fenêtres ajoutés au paquet cumulatif d'accusés ACK, comprenant :
une étape de réception consistant à recevoir et à compter les paquets présentant la taille de la fenêtre de transmission, qui sont transmis à partir de la section de transmission, à générer une valeur de comptage de paquets et à renvoyer le paquet cumulatif d'accusés ACK si la valeur de comptage de paquets atteint le nombre de référence spécifié correspondant à la taille de la fenêtre de transmission, et
une étape de génération de nouvelles informations de taille de fenêtres consistant à générer les nouvelles informations de taille de fenêtres sur la base d'une durée d'arrivée des paquets requise pour le nombre de référence spécifié de paquets correspondant à la taille de la fenêtre de transmission devant arriver et en l'ajoutant au paquet cumulatif d'accusés ACK.
